# FASCICULE DE BREVET EUROPEEN

(11) **EP 3 034 209 B1**
(45) Date de publication et mention de la délivrance du brevet: **27.02.2019**
(21) Numéro de dépôt: 15200473.5
(22) Date de dépôt: 16.12.2015
(51) Int. Cl.: B22F 3/11, C22C 1/10, B01J 23/10, B01J 35/00, H01M 4/90, B22F 1/00, C22C 29/12, C22C 32/00, B22F 9/22, C22C 1/05, B22F 1/02

(54) **PROCEDE DE PREPARATION D'UN MATERIAU COMPOSITE DU TYPE CERMET METTANT EN UVRE UNE RESINE ECHANGEUSE D'IONS**
HERSTELLUNGSVERFAHREN EINES VERBUNDMATERIALS VOM TYP CERMET, BEI DEM EIN IONENTAUSCHERHARZ ZUM EINSATZ KOMMT
METHOD FOR PREPARING A CERMET TYPE COMPOSITE MATERIAL USING AN ION EXCHANGE RESIN

(30) Priorité: 16.12.2014 FR 1462549
(43) Date de publication de la demande: 22.06.2016
(73) Titulaire: Commissariat à l'Énergie Atomique et aux Énergies Alternatives, 75015 Paris (FR)
(72) Inventeur: DELAHAYE, Thibaud, 30300 TRESQUES (FR); CAISSO, Marie, 38100 GRENOBLE (FR); PICART, Sébastien, 30400 VILLENEUVE LES AVIGNON (FR)
(74) Mandataire: Brevalex

(56) Documents cités:
- EP-A2- 0 525 844
- GB-A- 1 228 281
- OLGA COSTA-NUNES ET AL: "Comparison of the performance of Cu-CeO2-YSZ and Ni-YSZ composite SOFC anodes with H2, CO, and syngas", JOURNAL OF POWER SOURCES, vol. 141, no. 2, 1 mars 2005 (2005-03-01), pages 241-249, XP055220010, CH ISSN: 0378-7753, DOI: 10.1016/j.jpowsour.2004.09.022
- CHETTIBI S ET AL: "Ni-Ce intermetallic phases in CeO2-supported nickel catalysts synthesized by gamma-radiolysis", CATALYSIS TODAY, ELSEVIER, NL, vol. 113, no. 3-4, 15 avril 2006 (2006-04-15), pages 157-165, XP027976008, ISSN: 0920-5861 [extrait le 2006-04-15]

## Description

### DOMAINE TECHNIQUE

L'invention a trait à un procédé de préparation d'un matériau composite du type cermet, c'est-à-dire un matériau comprenant une céramique, et plus spécifiquement, une céramique oxyde, et un ou plusieurs éléments métalliques au degré d'oxydation 0. Qui plus est, le procédé de préparation de l'invention permet d'obtenir un matériau composite à composition et microstructure contrôlées, c'est-à-dire qu'il peut se présenter, par exemple, sous forme dense ou poreuse avec des teneurs en céramique/métal ajustables en fonction des propriétés recherchées.

De par sa nature, à savoir la coexistence d'une céramique et d'un ou plusieurs métaux, le matériau obtenu par le procédé de l'invention présente à la fois les propriétés d'une céramique (à savoir, le caractère réfractaire ou la stabilité thermique, la dureté et une microstructure ajustable) et les propriétés des métaux (à savoir, la conductivité électronique et une aptitude à la déformation plastique).

Au vu des propriétés physico-chimiques susmentionnées, l'invention peut ainsi trouver application dans un spectre très large de domaines d'applications, tel que le domaine de l'électronique, le domaine de la catalyse (notamment pour la pétrochimie), le domaine de l'électrochimie et plus spécifiquement, le domaine des piles à combustible du type SOFC (SOFC correspondant à l'abréviation anglo-saxonne « Solid Oxid Fuel Cell »), les cermets pouvant entrer dans la constitution des anodes de ce type de piles à combustible, comme notamment décrit dans Journal of Power Sources, Vol. 141, n°2, p.241-249.

### ÉTAT DE LA TECHNIQUE ANTÉRIEURE

Plusieurs voies de synthèse de cermets ont déjà été proposées dans l'art antérieur, notamment par des voies impliquant un mélange de poudres.

Ainsi, dans Journal of Membrane Science 401-402 (2012) 300-305, il est décrit la préparation d'un composite cermet de type Ni-BaCe_{0,95}Tb_{0,05}O_{3-δ} par mélange intime entre une poudre métallique et une poudre céramique d'un cermet suivi d'un pressage et d'un frittage dans des conditions contrôlées en termes de température et d'atmosphère, afin de former un matériau cohésif du type cermet.

Dans Solid State Ionics, 177 (2006), 2945-2950, il est décrit un procédé de préparation d'un cermet impliquant également un mélange de poudres mais, dans ce cas, avec un mélange de deux oxydes distincts (respectivement, de l'oxyde de nickel, NiO et un oxyde mixte de baryum, d'indium et de titane BaIn_{0,3}Ti_{0,7}O_{2,85}), qui est mis en forme par pressage puis fritté et soumis à un traitement de réduction en température sous atmosphère contrôlée afin, respectivement, de donner la cohésion à la pièce formée et de synthétiser le cermet en réduisant un des deux oxydes en métal, l'autre oxyde étant conservé sous sa forme oxydée. D'autres moyens de mise en forme peuvent être utilisés, tels que la sérigraphie, le coulage en bande.

Quel que soit le procédé employé, une des difficultés majeures réside dans l'obtention d'une répartition homogène des deux phases en fin de traitement de réduction. Cette difficulté est d'autant plus accrue, lorsque l'une des deux phases est largement minoritaire. Afin de contourner cet inconvénient, il a été mis au point des procédés basés sur l'imprégnation/infiltration d'une matrice céramique poreuse par une solution contenant des ions métalliques, tel que décrit dans Journal of Materials Chemistry, 17 (2007) 3071-3077. Les matrices ainsi imprégnées conduisent après un ou plusieurs traitements thermiques sous atmosphère contrôlée à la formation d'un cermet. Cependant, une telle démarche reste difficile à mettre en oeuvre. En effet, de nombreuses imprégnations successives sont souvent nécessaires, afin d'obtenir la composition chimique visée. Des ségrégations parasites de la phase métallique peuvent également être observées *via* ce type de procédé, pour lequel des inhomogénéités d'imprégnation sont mises en évidence entre le coeur et la périphérie du substrat imprégné.

D'autres voies de synthèse ont été mises au point impliquant des voies liquides.

Ainsi, EP 0 525 844 décrit la fabrication d'un cermet à base de nickel, comprenant du nickel sous forme métallique et une zircone comprenant les étapes suivantes :
(a) une étape de préparation d'une solution aqueuse comprenant un composé zirconyl, un sel de nickel et d'yttrium et un hydroxyacide organique ou un aminoacide organique, ou un poly(acide acrylique) ;
(b) une étape d'élimination d'eau de la solution préparée à l'étape (a) sans dégradation des éléments constitutifs de la solution, moyennant quoi l'on isole un matériau solide poreux ;
(c) une étape de calcination du matériau solide poreux obtenu à l'étape (b), dans des conditions oxydantes, moyennant quoi il se forme un matériau solide comprenant deux phases distinctes : une phase d'oxyde de nickel et une phase de zircone stabilisée avec un oxyde d'yttrium ; et
(d) une étape de réduction de l'oxyde de nickel moyennant quoi il subsiste le cermet.

GB 1 228 281 décrit la fabrication de matériaux métalliques comprenant des métaux et des alliages métalliques, par exemple, du fer, du cobalt, du nickel et, de manière plus spécifique, des matériaux métalliques comprenant des particules d'oxyde réfractaire, de tels matériaux pouvant être préparés par les étapes suivantes :
a) la formation d'une solution comprenant :
   *au moins un sel chlorure choisi parmi les chlorures métalliques, lequel métal sous forme oxyde est réductible en présence d'hydrogène à une température de 600 à 1800° F ;
   * au moins un sel chlorure choisi parmi les chlorures métalliques, lequel métal sous forme oxyde n'est pas réductible en présence d'hydrogène à une température de 600 à 1800° F
   *un alcool inférieur ;
b) l'addition à ladite solution d'un composé époxy (par exemple, un oxyde d'alkylène inférieur, une épichlorhydrine), moyennant quoi les composés de la solution réagissent avec ledit composé époxy pour former un gel contenant au moins un hydroxyde métallique ;
c) la conversion dudit ou desdits hydroxydes métalliques en oxyde(s) métallique(s) correspondants consistant en un mélange d'oxyde réductible et d'oxyde non réductible ;
d) la réduction du ou desdits oxyde(s) métallique(s) en métal, moyennant quoi il subsiste un matériau comprenant un métal et des particules d'oxyde métallique ;
e) la compaction du matériau.

Aussi, au vu de ce qui existe, les Inventeurs se sont fixé pour objectif de mettre au point un procédé de préparation d'un cermet homogène qui ne nécessite pas l'utilisation de poudres et qui ne nécessite pas également l'utilisation d'un précurseur du cermet, en l'occurrence, la partie céramique, comme matériau d'imprégnation pour incorporer l'élément métallique destiné à constituer la partie métallique du cermet.

### EXPOSÉ DE L'INVENTION

Ainsi, l'invention a trait à un procédé de préparation d'un cermet comme définit par les revendications 1 à 9.

Ainsi, le procédé de l'invention est un procédé qui ne fait pas intervenir la technique de la métallurgie des poudres pour former un cermet et les inconvénients en découlant, tels que notamment la manipulation des poudres, qui peuvent présenter un caractère cancérogène, mutagène et/ou reprotoxiques (ce qui est le cas, par exemple, des poudres de NiO) et, a *fortiori*, la mise en oeuvre de mélange à sec à partir de ces poudres, ce qui présenterait des risques de dissémination de fines particules et engendrerait la nécessité d'engager des investissements en matière de confinement (par exemple, mise en place de boîte à gants, de salles blanches).

En revanche, le procédé de l'invention utilise la capacité d'une résine échangeuse d'ions à fixer, de manière homogène, à la fois le ou lesdits élément(s) chimique(s) destinés à entrer dans la constitution de la partie céramique oxyde du cermet et le ou lesdits élément(s) métallique(s) destiné(s) à former la partie métallique du cermet. La fixation se fait par échange entre les ions portés par des groupes spécifiques de la résine et le ou les éléments chimiques et le ou lesdits élément(s) métallique(s) présents sous forme ionique dans la solution.

A travers l'utilisation de résine échangeuse d'ions, la fixation ionique étant réalisée à l'échelle atomique, le procédé de l'invention permet de bénéficier d'une répartition homogène dans le cermet du métal au sein de la matrice céramique ou inversement.

Le procédé de l'invention permet donc de favoriser un mélange intime entre la phase céramique et la phase métallique du cermet, ce qui peut permettre d'assurer des transferts de charge (tels qu'un transfert d'électrons) ou encore l'établissement de densités de points triples (liés à la présence simultanée de la phase céramique, de la phase métallique et de pores) ou de sites réactionnels élevées.

Par ailleurs, la composition du cermet peut être parfaitement ajustée en jouant sur la composition de la solution utilisée dans l'étape a), comme l'état de complexation des ions, la proportion des ions en solution.

Comme mentionné ci-dessus, le cermet préparé selon l'invention comprend à la fois une céramique oxyde comprenant un ou plusieurs éléments chimiques, et au moins un élément métallique à son degré d'oxydation 0 (ce qui signifie, en d'autres termes, que le ou les élément(s) métallique(s) constituent des métaux en tant que tels).

Lorsqu'il y a plusieurs éléments métalliques, ceux-ci peuvent former un alliage métallique entre eux.

Le ou lesdits éléments chimiques susceptibles d'entrer dans la composition de la céramique oxyde peuvent être choisis parmi les éléments appartenant à la catégorie des éléments de transition, des éléments lanthanides, des éléments actinides ou des éléments choisis parmi Al, Ga, Ge, In, Sn, Sb, Tl, Pb, Bi et Y. Plus spécifiquement, il peut s'agir d'un élément lanthanide, tel que le cérium, le gadolinium ou le néodyme.

Le au moins un élément métallique susceptible de former le au moins un élément métallique à son degré d'oxydation 0 est, avantageusement, un élément de transition, par exemple, un élément choisi parmi Ni, Cr, Co, Cu, Ru, Re, W, Au, Rh, Pd, Pt, Ir, et plus spécifiquement, le nickel ou le cuivre.

Il s'entend que le ou les éléments chimiques susceptibles d'entrer dans la composition de la céramique oxyde et le au moins un élément métallique susceptible de constituer ledit au moins un élément métallique à son degré d'oxydation 0 peuvent être des éléments distincts ou non, selon les éléments concernés et les quantités mises en jeu.

En effet, le ou les éléments chimiques destinés à entrer dans la constitution de la céramique et le ou les éléments métalliques destinés à constituer la phase métallique du cermet peuvent être identiques, notamment, lorsque la phase céramique ne peut accepter qu'un pourcentage limité de l'élément métallique dans sa structure, l'excédent formant ainsi la phase métallique du cermet.

A titre d'exemple, le procédé de l'invention permet l'obtention des cermets spécifiques suivantes :
- un cermet comprenant, comme partie céramique, de la cérine CeO₂ et, comme partie métallique, du cuivre ;
- un cermet comprenant, comme partie céramique, de la cérine CeO₂ et, comme partie métallique, du nickel ;
- un cermet comprenant, comme partie céramique, de la cérine dont une partie des atomes de cérium est substituée par des atomes de gadolinium pour former un oxyde mixte et, comme partie métallique, du nickel.

Avant la mise en oeuvre de l'étape a), le procédé de l'invention peut comprendre une étape de préparation de la solution aqueuse comprenant le ou lesdits éléments chimiques et ledit au moins un élément métallique sous forme ionique.

Cette solution aqueuse peut être obtenue par dissolution d'au moins un sel du ou des éléments chimique et d'au moins un sel du ou des éléments métalliques dans une solution aqueuse, ce ou ces sels pouvant être des nitrates, étant entendu que les sels sont introduits dans la solution aqueuse dans des quantités prédéterminées en fonction de la composition du cermet que l'on souhaite obtenir.

Ces quantités prédéterminées peuvent correspondre aux proportions stoechiométriques de ces éléments dans le cermet final visé ou devront tenir compte des isothermes d'échange de ces éléments sur la résine choisie.

Comme mentionné ci-dessus, l'étape a) consiste à mettre en contact une solution aqueuse comprenant le ou lesdits éléments chimiques et ledit au moins un élément métallique sous forme ionique avec une résine échangeuse d'ions, moyennant quoi le ou lesdits éléments chimiques et le ou lesdits élément(s) métallique(s) se fixent par échange ionique à la résine.

Classiquement, une résine échangeuse d'ions est un polymère tridimensionnel (par exemple, de la famille des polymères polyacryliques) comprenant des groupements ionisés ou ionisables, qui lui confère des propriétés d'échangeur d'ions.

Lorsque le ou les éléments chimiques et ledit au moins un élément métallique se présentent sous forme cationique, la résine échangeuse d'ions est, avantageusement, une résine échangeuse de cations, tel que, par exemple, une résine comprenant des groupes carboxylates portant des ions NH₄⁺, ces derniers étant aptes à s'échanger avec le ou les éléments chimiques et le ou lesdits élément(s) métallique(s) sous forme cationique.

Les résines utilisées peuvent se présenter sous diverses formes, telles que des formes compactées (par exemple, des cylindres, des sphères, des granulés, des membranes), des formes divisées comme les poudres.

A titre d'exemple, les résines peuvent se présenter sous forme de billes ou de microsphères.

Les résines présentent également avantageusement une porosité contrôlée, par exemple, avec une homogénéité dans la taille de pores et dans la répartition des pores.

A titre d'exemples, les résines utilisées dans le cadre de l'invention peuvent être des résines résultant de la (co)polymérisation de l'acrylonitrile avec un agent de réticulation, notamment le divinylbenzène (DVB). Il faudra prévoir, après polymérisation, une étape d'hydrolyse des groupes -CN en groupes carboxyliques.

Des résines commerciales pouvant être utilisées pour la mise en oeuvre du procédé de l'invention peuvent être les résines fournies par Rohm&Haas, telles que les résines IMAC HP 333.

La résine échangeuse de cations choisie peut être amenée à subir une ou plusieurs étapes de traitement avant passage de la solution de charge, parmi lesquelles on peut citer :
- une étape de calibrage, par voie humide, de sorte à isoler la fraction granulométrique désirée, par exemple, une fraction allant de 600 à 800 *µ*m ;
- au moins une étape de lavage en mettant en oeuvre un cycle de traitement acide et basique avec de l'acide nitrique et de l'ammoniaque suivie d'une étape de rinçage à l'eau déminéralisée ;
- une étape de séchage après l'étape de rinçage ;
- une étape de tri de forme, de sorte à éliminer les particules brisées ou non sphériques, cette étape pouvant être réalisée sur une table inclinée.

On précise que l'étape de lavage susmentionnée a pour but de nettoyer la résine de toute présence de résidus de synthèse et d'ions alcalins. Ainsi, la fixation d'un groupe ammonium par réaction de neutralisation du proton des groupes carboxyliques permet un gonflement de la résine propice à un meilleur accès des pores à l'eau de lavage.

La résine, éventuellement traitée si besoin est, peut, lorsqu'elle est utilisée sous forme d'un lit, être ensuite avantageusement humidifiée généreusement, et placée dans une colonne pour former un lit de particules de résine destiné à recevoir la solution aqueuse.

L'étape de mise en contact de la solution sur la résine, consiste, en d'autres termes, en une imprégnation de la résine par la solution aqueuse, par exemple, via la circulation de la solution à travers le lit de résine.

Le pH de la solution aqueuse peut être fixé à un pH prédéterminé, si cela est nécessaire pour obtenir un échange optimal avec la résine échangeuse d'ions.

La solution aqueuse comprend, classiquement, des quantités prédéterminées du ou des éléments chimiques et de l'élément métallique en fonction de la composition du cermet visée, ces quantités prédéterminées étant telles que définies ci-dessus.

Cette mise en contact (ou imprégnation) peut se dérouler selon différentes variantes.

Selon une première variante, elle peut consister à immerger la résine dans la solution aqueuse contenant le ou les éléments chimiques et le ou lesdits élément(s) métallique(s) sous forme ionique et à maintenir l'ensemble sous agitation.

Selon une deuxième variante, elle peut consister à laisser écouler, par percolation, à travers un lit de résine, la solution aqueuse et à récupérer un éluat.

Selon cette variante, la résine, lorsqu'il s'agit, par exemple, d'une résine comprenant des groupes carboxyliques, échange progressivement ses protons contre les cations du ou des éléments chimiques et de l'élément métallique. Le pH de l'éluat diminue brusquement, lorsque débute l'échange avec la résine sous forme protonique (c'est-à-dire comprenant des groupes carboxyliques -COOH). Il remonte ensuite progressivement jusqu'à retrouver la valeur du pH de la charge d'entrée, ce qui signifie que l'échange est terminé et que la résine se trouve saturée en le ou les éléments chimiques et l'élément métallique. On peut ainsi stopper le passage de la solution sur la résine. En d'autres termes, on procède au passage sur la résine de la solution de charge jusqu'à obtention d'un éluat présentant une concentration identique à celle de la solution de départ.

Quelle que soit la variante envisagée, l'étape de mise en contact peut s'accompagner d'une étape de recirculation de la solution aqueuse, c'est-à-dire que chaque volume de la solution est destinée à repasser une ou plusieurs fois sur la résine échangeuse d'ions.

Quelle que soit la variante envisagée, l'étape de mise en contact peut être réalisée à une température et/ou une pression prédéterminées, dès lors que cette température et/ou pression prédéterminées peuvent permettre un échange ionique optimale.

Après l'étape de mise en contact, le procédé de l'invention peut comprendre une étape de lavage de la résine avec de l'eau déminéralisée, notamment en vue de chasser la charge en surface de la résine.

Enfin, après l'étape de mise en contact et l'éventuelle étape de lavage, le procédé peut comprendre une étape de séchage de la résine, par exemple, à une température aux environs de 100°C, par exemple à 105°C, de sorte à provoquer l'évaporation de l'eau présente dans les pores de la résine, cette étape de séchage pouvant être réalisée dans une étuve.

Selon l'invention, la résine ainsi complexée à l'issue de l'étape a) est ensuite amenée à subir une étape de traitement thermique de ladite résine sous atmosphère oxydante pour former un ou plusieurs oxydes du ou desdits éléments chimiques et au moins un oxyde dudit ou desdits élément(s) métallique(s).

Cette étape de traitement thermique consiste, classiquement, en une calcination destinée à éliminer le squelette organique de la résine, cette calcination pouvant se dérouler à une température pouvant aller jusqu'à 1000°C, et étant réalisée dans des conditions oxydantes (par exemple, sous air) de sorte à former les oxydes susmentionnés.

Cette étape de traitement thermique peut être réalisée dans un four tubulaire. A l'issue de cette étape, il résulte ainsi un ou des oxydes du ou des éléments chimiques et un ou des oxyde(s) du ou des élément(s) métallique(s), ce mélange présentant la forme de la résine utilisée (par exemple, des microsphères, si la résine utilisée initialement se présente sous forme de microsphères).

Dans certains cas, le ou les oxydes du ou des éléments chimiques et le ou les oxyde(s) du ou des élément(s) métallique(s) peuvent former ensemble un ou des oxydes mixtes.

Après l'étape de traitement thermique b), il s'ensuit une étape de réduction sélective du ou des oxyde(s) dudit au moins un élément métallique en ledit au moins un élément métallique à son degré d'oxydation 0.

Il s'entend que les conditions opératoires de cette étape de réduction sélective seront choisies de sorte à ne réduire que le ou les oxyde(s) dudit au moins un élément métallique, le ou les oxydes du ou desdits éléments chimiques restant stables dans les conditions opératoires retenues.

A l'issue du procédé de l'invention, c'est-à-dire après l'étape de réduction, il peut être mis en oeuvre une étape de dissolution partielle du cermet, qui peut avoir pour fonction des visées diverses :
- soit une fonction de contrôle de la porosité du cermet ; et/ou
- soit une fonction d'ajustement de la composition chimique du cermet, par exemple, le rapport oxyde/métal dans le cermet final en dissolvant, par exemple, une partie du métal.

Avant l'étape de réduction et après l'étape b), le procédé de l'invention peut comprendre une étape de mise en forme du produit obtenu, par exemple, par pressage, coulage de bande, sérigraphie.

Avant l'étape de réduction et après l'étape b) et après l'éventuelle étape de mise en forme, le procédé de l'invention peut comprendre une étape de consolidation thermique, plus spécifiquement, une étape de frittage.

Cette étape de consolidation thermique peut être associée en continuité de l'étape de traitement thermique b).

Quant à l'étape de réduction, lorsque l'étape de consolidation a lieu, l'étape de réduction peut être réalisée directement dans la continuité de l'étape de consolidation thermique, ou au cours d'une étape ultérieure bien distincte ou voire in operando pendant le premier cycle d'utilisation du cermet.

Si lors de l'étape de calcination sous atmosphère oxydante, tous les éléments mis en jeu réagissent ensemble pour former un oxyde mixte, l'étape de réduction permet au moins de précipiter une partie ou la totalité du ou des élément(s) métallique(s) de l'oxyde mixte sous former d'élément(s) métallique(s) au(x) degré(s) d'oxydation 0 (on parle alors d'exsolution). A titre d'exemple, une partie du nickel présent dans le composé La_{0,5}Sr_{0,5}Ti_{0,75}Ni_{0,25}O₃ peut, après réduction, précipiter sous forme de nanoparticules de nickel.

Le procédé de l'invention peut permettre de contrôler la porosité du cermet final. En effet, la porosité finale du cermet peut être contrôlée en ajustant la température et l'atmosphère de calcination de la résine chargée et/ou la température du traitement de réduction, mais aussi en fonction des conditions de séchage de la résine (CO₂ super critique, lyophilisation, etc.), ou encore le rendement de fixation, c'est-à-dire le taux de chargement par rapport au nombre de sites disponibles.

D'autres caractéristiques et avantages de l'invention apparaîtront mieux à la lecture du complément de description qui suit, lequel se rapporte à des exemples de fabrication d'un cermet CeO₂-Cu (Exemple 1) ou d'un cermet Ce₁₋ₓGdₓO₂-Ni (Exemple 2).

Bien entendu, les exemples qui suivent ne sont donnés qu'à titre d'illustration de l'objet de l'invention et ne constituent en aucun cas une limitation de cet objet.

### BRÈVE DESCRIPTION DES DESSINS

La figure 1 représente un graphique du type diffractogramme des rayons X sur poudre représentant l'intensité I en fonction de l'angle 2θ (en °) pour le produit intermédiaire CeO₂-CuO obtenu à l'exemple 1.
La figure 2 représente un graphique du type diffractogramme des rayons X sur poudre représentant l'intensité I en fonction de l'angle 2θ (en °) pour le produit final CeO₂-Cu obtenu à l'exemple 1.
La figure 3 représente un graphique du type diffractogramme des rayons X sur poudre représentant l'intensité I en fonction de l'angle 2θ (en °) pour le produit intermédiaire Ce₁₋ₓGdₓO_{2-δ}-NiO obtenu à l'exemple 2.
La figure 4 représente un graphique du type diffractogramme des rayons X sur poudre représentant l'intensité I en fonction de l'angle 2θ (en °) pour le produit intermédiaire Ce₁₋ₓGdₓO_{2-δ}-Ni obtenu à l'exemple 2.

### EXPOSÉ DÉTAILLÉ DE MODES DE RÉALISATION PARTICULIERS

### EXEMPLE 1

Dans cet exemple, il est procédé à la préparation d'un cermet comprenant, comme partie céramique CeO₂, et comme partie métallique du cuivre métallique.

Pour ce faire, une résine de type polyacrylique présentant des contre-ions ammonium se présentant sous forme de microsphères est introduite dans une colonne et chargée par recirculation d'une solution aqueuse contenant, à la fois, des ions Ce³⁺ et Cu²⁺ dans les proportions atomiques suivantes (20/80). Cette solution de chargement est obtenue par dissolution en milieu aqueux de nitrate de cérium et de nitrate de cuivre dans les proportions stoechiométriques susmentionnées.

Après chargement, la résine est rincée à l'eau déminéralisée afin d'éliminer toutes de traces de cations non fixés puis est séchée 12 heures dans une étuve à 100°C. La résine ainsi chargée et séchée est calcinée sous air à 800°C pendant 1 heure, en mettant en oeuvre le cycle thermique suivant :
- une étape de chauffage de 298 K jusqu'à 623 K à raison d'une vitesse de 1K.min⁻¹ ;
- une étape de chauffage de 623 K jusqu'à 1073 K à raison d'une vitesse de 1,5 K.min⁻¹ ;
- une étape de maintien de la température à 1073 K pendant 1 heure ;
- une étape de refroidissement de 1073 K à 298 K à raison d'une vitesse de 5 K.min⁻¹.

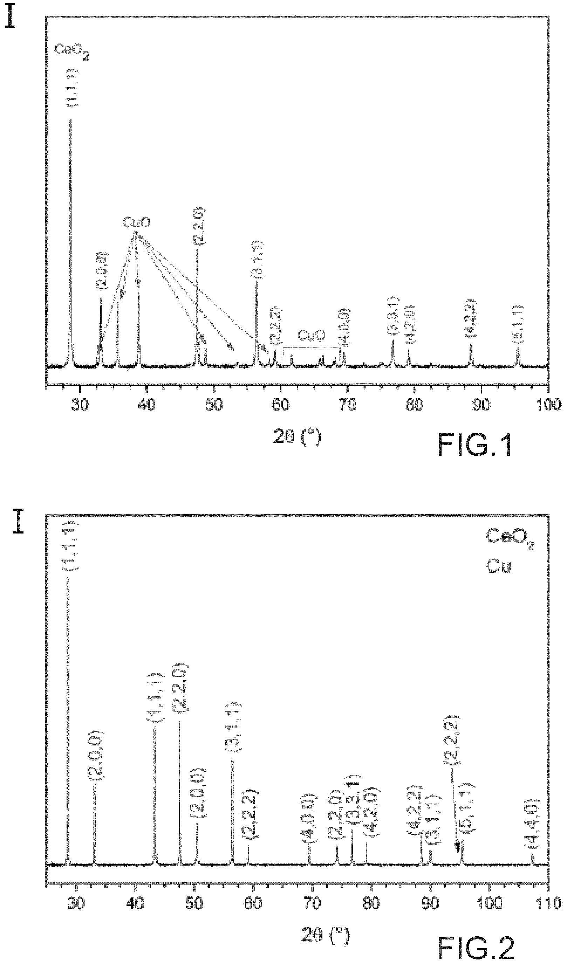

A l'issue de ce traitement, des microsphères présentant une surface spécifique de 4 m².g⁻¹ ont ainsi été synthétisées. Une partie de ces microsphères a été broyée et analysée par diffraction des rayons X sur poudre. Le diagramme obtenu témoigne de la présence d'un mélange biphasique de CeO₂ et de CuO sans formation de solution solide entre le Ce et le Cu, comme attesté par la Figure 1.

Le restant des billes ainsi constitué du composite CeO₂/CuO a été traité sous atmosphère réductrice (Ar/H₂ (4%)) afin de réduire l'oxyde de cuivre en cuivre métal tout en conservant l'oxyde de cérine, oxyde stable dans ces conditions de traitement.

Le cycle thermique employé est le suivant :
- une étape de chauffage de 298 K jusqu'à 923 K à raison d'une vitesse de 5 K.min⁻¹ ;
- une étape de maintien de la température à 923 K pendant 3 heures ;
- une étape de refroidissement de 923 K à 298 K à raison d'une vitesse de 5 K.min⁻¹.

A l'issue de ce traitement de réduction, des microsphères te type cermet à base de cérine et de cuivre métallique ont été obtenues comme en témoigne le diagramme de la figure 2 qui révèle uniquement la présence de ces deux phases.

En fin d'expérience, les microsphères de cérine synthétisées ont conservé la sphéricité de la matrice résine de départ. Aucune déformation des microsphères n'est observée.

### EXEMPLE 2

Dans cet exemple, il est procédé à la préparation d'un cermet comprenant, comme partie céramique un oxyde de formule Ce_{0.8}Gd_{0.2}O_{2-δ}, et comme partie métallique du nickel métallique.

Pour ce faire, une résine de type polyacrylique comprenant, comme contre-ions, des ions ammonium, se présentant sous forme de microsphères est introduite dans une colonne et chargée par recirculation d'une solution aqueuse contenant des ions Ce³⁺, Gd³⁺ et Ni²⁺ respectivement dans les proportions atomiques suivantes 16%, 4% et 80%. Cette solution de chargement est obtenue par dissolution en milieu aqueux de nitrate de cérium, de nitrate de gadolinium et nitrate de nickel dans les proportions stoechiométriques susmentionnées. Après chargement, la résine est rincée afin d'éliminer toutes traces de cations non fixés puis est séchée 12 heures dans une étuve à 100°C. La résine ainsi chargée est calcinée sous air à 800°C pendant 1 heure en mettant en oeuvre le cycle thermique suivant :
- une étape de chauffage de 298 K jusqu'à 623 K à raison d'une vitesse de 1 K.min⁻¹ ;
- une étape de chauffage de 623 K jusqu'à 1073 K à raison d'une vitesse de 1,5 K.min⁻¹ ;
- une étape de maintien de la température à 1073 K pendant 1 heure ;
- une étape de refroidissement de 1073 K à 298 K à raison d'une vitesse de 5 K.min⁻¹.

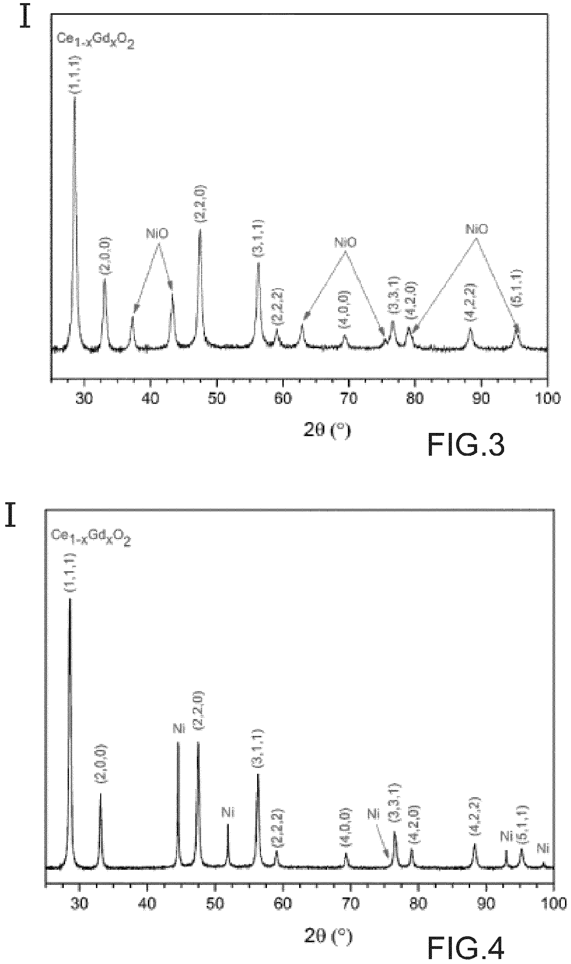

A l'issue de ce traitement, des microsphères présentant une surface spécifique de 4 m².g⁻¹ ont ainsi été synthétisées. Une partie de ces microsphères a été broyée et analysée par diffraction des rayons X sur poudre. Le diagramme obtenu témoigne de la présence d'une solution solide de type Ce_{0.8}Gd_{0.2}O_{2-δ} (où δ représente l'écart à la stoechiométrie en oxygène qui permet d'assurer l'électroneutralité de la structure) et d'un oxyde simple de type NiO, comme illustré par la figure 3.

Le restant des billes ainsi constitué du composite Ce_{0.8}Gd_{0.2}O_{2-δ}/NiO a été traité sous atmosphère réductrice (Ar/H₂ (4%)) afin de réduire l'oxyde de nickel en nickel métal tout en conservant l'oxyde de cérine substitué/dopé au gadolinium, oxyde stable dans ces conditions de traitement.

Le cycle thermique employé est le suivant :
- une étape de chauffage de 298 K jusqu'à 923 K à raison d'une vitesse de 5 K.min⁻¹ ;
- une étape de maintien de la température à 923 K pendant 3 heures ;
- une étape de refroidissement de 923 K à 298 K à raison d'une vitesse de 5 K.min⁻¹.

A l'issue de ce traitement de réduction, des microsphères de type cermet à base de cérine substituée au gadolinium et de nickel ont été obtenues, comme en témoigne le diagramme de la figure 4 qui révèle uniquement la présence de ces deux phases.

En fin d'expérience, les microsphères de cermet synthétisées ont conservé la sphéricité de la matrice résine de départ. Aucune déformation des microsphères n'est observée.

## Revendications

1. Procédé de préparation d'un cermet comprenant une céramique oxyde comprenant un ou plusieurs élément(s) chimique(s), et comprenant au moins un élément métallique à son degré d'oxydation 0, ledit procédé comprenant successivement :
a) une étape d'imprégnation d'une résine échangeuse d'ions par une solution aqueuse comprenant le ou lesdits élément(s) chimique(s) et ledit au moins un élément métallique sous forme ionique, moyennant quoi le ou lesdits élément(s) chimique(s) et ledit au moins un élément métallique s'échangent au niveau de la résine ;
b) une étape de traitement thermique de ladite résine sous atmosphère oxydante pour former un ou plusieurs oxydes du ou desdits élément(s) chimique(s) et au moins un oxyde dudit au moins un élément métallique ;
c) une étape de réduction sélective du ou des oxyde(s) dudit au moins un élément métallique en ledit au moins un élément métallique à son degré d'oxydation 0.

2. Procédé de préparation d'un cermet selon la revendication 1, dans lequel le ou lesdits éléments chimiques susceptibles d'entrer dans la composition de la céramique oxyde sont choisis parmi les éléments appartenant à la catégorie des éléments de transition, des éléments lanthanides, des éléments actinides ou des éléments choisis parmi Al, Ga, Ge, In, Sn, Sb, Tl, Pb, Bi et Y.

3. Procédé de préparation d'un cermet selon la revendication 1 ou 2, dans lequel le ou lesdits éléments chimiques susceptibles d'entrer dans la composition de la céramique oxyde sont choisis parmi les éléments lanthanides.

4. Procédé de préparation d'un cermet selon l'une quelconque des revendications précédentes, dans lequel ledit au moins un élément métallique susceptible de constituer ledit au moins un élément métallique à son degré d'oxydation 0 est un élément de transition.

5. Procédé de préparation d'un cermet selon l'une quelconque des revendications précédentes, dans lequel l'élément métallique susceptible de constituer l'élément métallique à son degré d'oxydation 0 est le cuivre ou le nickel.

6. Procédé de préparation d'un cermet selon l'une quelconque des revendications précédentes, comprenant, avant la mise en oeuvre de l'étape a), une étape de préparation de la solution aqueuse comprenant le ou lesdits éléments chimiques et ledit au moins un élément métallique sous forme ionique.

7. Procédé de préparation d'un cermet selon la revendication 6, dans lequel l'étape de préparation de la solution aqueuse consiste à dissoudre au moins un sel du ou des éléments chimiques et au moins un sel du ou desdits élément(s) métallique(s) dans une solution aqueuse.

8. Procédé de préparation d'un cermet selon l'une quelconque des revendications précédentes, dans lequel, lorsque le ou les éléments chimiques et ledit au moins un élément métallique se présentent sous forme cationique, la résine échangeuse d'ions est une résine échangeuse de cations.

9. Procédé de préparation d'un cermet selon l'une quelconque des revendications précédentes, comprenant, en outre, une étape de dissolution partielle du cermet.

10. Procédé de préparation d'un cermet selon l'une quelconque des revendications précédentes, dans lequel le cermet est :
- un cermet comprenant, comme partie céramique, de la cérine CeO₂ et, comme partie métallique, du cuivre ;
- un cermet comprenant, comme partie céramique, de la cérine CeO₂ et, comme partie métallique, du nickel ; ou
- un cermet comprenant, comme partie céramique, de la cérine dont une partie des atomes de cérium est substituée par des atomes de gadolinium et, comme partie métallique, du nickel.

## Patentansprüche

1. Verfahren zur Herstellung eines Cermets, umfassend eine Oxidkeramik, umfassend ein oder mehrere chemische(s) Element(e), und umfassend wenigstens ein metallisches Element in seinem Oxidationsgrad 0, wobei das Verfahren sukzessive Folgendes umfasst:
a) einen Schritt des Imprägnierens eines lonenaustauschharzes mit einer wässrigen Lösung, umfassend das oder die chemische(n) Element(e) sowie das wenigstens eine metallische Element in ionischer Form, wodurch das oder die chemische(n) Element(e) sowie das wenigstens eine metallische Element im Bereich des Harzes ausgetauscht werden;
b) einen Schritt der thermischen Behandlung des Harzes unter einer oxidierenden Atmosphäre, um ein oder mehrere Oxide des chemischen Elements oder der chemischen Elemente sowie wenigstens ein Oxid des wenigstens einen metallischen Elements zu bilden;
c) einen Schritt der selektiven Reduktion des Oxids oder der Oxide des wenigstens einen metallischen Elements in das wenigstens eine metallische Element in seinem Oxidationsgrad 0.

2. Verfahren zur Herstellung eines Cermets nach Anspruch 1, bei dem das oder die chemische(n) Element(e), die dazu ausgelegt sind, in die Zusammensetzung der Oxidkeramik einzugehen, ausgewählt sind aus den Elementen, die zur Kategorie der Übergangselemente, der Lanthanidelemente, der Aktinidelemente oder der Elemente gehören, die ausgewählt sind aus Al, Ga, Ge, In, Sn, Sb, Tl, Pb, Bi und Y.

3. Verfahren zur Herstellung eines Cermets nach Anspruch 1 oder 2, bei dem das oder die chemische(n) Element(e), die dazu ausgelegt sind, in die Zusammensetzung der Oxidkeramik einzugehen, aus den Lanthanidelementen ausgewählt sind.

4. Verfahren zur Herstellung eines Cermets nach einem der vorhergehenden Ansprüche, bei dem das wenigstens eine metallische Element, das dazu ausgelegt ist, das wenigstens eine metallische Element in seinem Oxidationsgrad 0 zu bilden, ein Übergangselement ist.

5. Verfahren zur Herstellung eines Cermets nach einem der vorhergehenden Ansprüche, bei dem das metallische Element, das dazu ausgelegt ist, das metallische Element in seinem Oxidationsgrad 0 zu bilden, Kupfer oder Nickel ist.

6. Verfahren zur Herstellung eines Cermets nach einem der vorhergehenden Ansprüche, umfassend vor der Durchführung des Schritts a) einen Schritt der Herstellung der wässrigen Lösung, umfassend das oder die chemische(n) Element(e) sowie das wenigstens eine metallische Element in ionischer Form.

7. Verfahren zur Herstellung eines Cermets nach Anspruch 6, bei dem der Schritt der Herstellung der wässrigen Lösung ein Lösen wenigstens eines Salzes des chemischen Elements oder der chemischen Elemente und wenigstens eines Salzes des metallischen Elements oder der metallischen Elemente in einer wässrigen Lösung umfasst.

8. Verfahren zur Herstellung eines Cermets nach einem der vorhergehenden Ansprüche, bei dem dann, wenn das oder die chemische(n) Element(e) sowie das wenigstens eine metallische Element in kationischer Form vorliegen, das Ionenaustauschharz ein Kationenaustauschharz ist.

9. Verfahren zur Herstellung eines Cermets nach einem der vorhergehenden Ansprüche, ferner umfassend einen Schritt des partiellen Auflösens des Cermets.

10. Verfahren zur Herstellung eines Cermets nach einem der vorhergehenden Ansprüche, bei dem das Cermet Folgendes ist:
- ein Cermet, das als keramischen Teil Ceroxid CeO₂, und als metallischen Teil Kupfer umfasst;
- ein Cermet, das als keramischen Teil Ceroxid CeO₂, und als metallischen Teil Nickel umfasst; oder
- ein Cermet, das als keramischen Teil Ceroxid umfasst, bei dem ein Teil der Ceratome durch Gadoliniumatome ersetzt ist, und als metallischen Teil Nickel.

## Claims

1. A method for preparing a cermet comprising an oxide ceramic comprising one or more chemical element(s), and comprising at least one metal element at its degree of oxidation of 0, said method successively comprising:
a) a step of impregnating an ion-exchange resin by an aqueous solution comprising said chemical element(s) and said at least one metal element in an ionic form, whereby said chemical element(s) and said at least one metal element are exchanged at the resin;
b) a step of heat treating said resin in an oxidizing atmosphere to form one or more oxides of said chemical element(s) and at least one oxide of said at least one metal element;
c) a step of selectively reducing the oxide(s) of said at least one metal element into said at least one metal element at its degree of oxidation of 0.

2. The method for preparing a cermet according to 1, wherein said chemical element(s) likely to be part of the composition of the oxide ceramic are chosen from elements belonging to the category of transition elements, lanthanide elements, actinide elements or elements chosen from Al, Ga, Ge, In, Sn, Sb, Tl, Pb, Bi, and Y.

3. The method for preparing a cermet according to claim 1 or 2, wherein said chemical element(s) likely to be part of the composition of the oxide ceramic are chosen from lanthanide elements.

4. The method for preparing a cermet according to any of the preceding claims, wherein said at least one metal element likely to be said at least one metal element at its degree of oxidation of 0 is a transition element.

5. The method for preparing a cermet according to any of the preceding claims, wherein the metal element likely to be the metal element at its degree of oxidation of 0 is copper or nickel.

6. The method for preparing a cermet according to any of the preceding claims, comprising, before implementing step a), a step of preparing the aqueous solution comprising said chemical element(s) and said at least one metal element in an ionic form.

7. The method for preparing a cermet according to claim 6, wherein the step of preparing the aqueous solution consists in dissolving at least one salt of the chemical element(s) and at least one salt of said metal element(s) in an aqueous solution.

8. The method for preparing a cermet according to any of the preceding claims, wherein, the chemical element(s) and said at least one metal element are in a cationic form, the ion-exchange resin is a cation-exchange resin.

9. The method for preparing a cermet according to any of the preceding claims, further comprising a step of partially dissolving the cermet.

10. The method for preparing a cermet according to any of the preceding claims, wherein the cermet is:
- a cermet comprising, as a ceramic part, cerine CeO₂ and, as a metal part, copper;
- a cermet comprising, as a ceramic part, cerine CeO₂ and, as a metal part, nickel; or
- a cermet comprising, as a ceramic part, cerine a part of the cerium atoms of which is substituted by gadolinium atoms and, as a metal part, nickel.
